# EUROPEAN PATENT APPLICATION

(11) **EP 4 822 789 A1**
(43) Date of publication of application: **14.10.2026**
(21) Application number: 26164177.3
(22) Date of filing: 12.03.2026
(51) Int. Cl.: H01M 4/86, C25B 1/04, H01M 4/92, H01M 12/06

(54) **ELECTROCHEMICAL OXYGEN REDUCTION CATALYST**

(30) Priority: 07.04.2025 JP 2025062870
(71) Applicant: TOYOTA JIDOSHA KABUSHIKI KAISHA, Toyota-Shi, Aichi-Ken 471-8571 (JP)
(72) Inventor: OKUBO, Keiichi, Toyota-shi, Aichi, 471-8571 (JP)
(74) Representative: TBK

(57) **Abstract**

Provided is an electrochemical oxygen reduction catalyst in which a decrease in catalytic activity is suppressed. The present disclosure relates to an electrochemical oxygen reduction catalyst, a manufacturing method thereof, and a fuel cell and a water electrolysis system using the electrochemical oxygen reduction catalyst. The electrochemical oxygen reduction catalyst comprises a catalyst metal having an oxygen reduction activity and an additive that modifies the catalyst metal. The additive contains a nitrogen-containing cyclic organic compound having a triazine skeleton, a polymer thereof, or a cation thereof. In the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound.

## Description

### BACKGROUND

### Technical Field

The present disclosure relates to an electrochemical oxygen reduction catalyst, a method for manufacturing the same, and a fuel cell and a water electrolysis system using the electrochemical oxygen reduction catalyst.

### Background Art

Electrochemical oxygen reduction catalysts or electrochemical oxygen evolution catalysts are widely used in fuel cells, water electrolysis systems, metal-air batteries, and the like. As the electrochemical oxygen reduction catalysts or the electrochemical oxygen evolution catalysts, there has been known a catalyst in which a catalyst metal is modified with a nitrogen-containing organic compound. Oxygen Evolution Reaction (OER) and Oxygen Reduction Reaction (ORR) are mutually reversible reactions, and it is generally known that catalysts exhibiting high oxygen reduction reaction activity, such as iridium (Ir) and platinum (Pt), also exhibit high oxygen evolution reaction activity.

JP 2024-11754 A discloses a catalyst comprising a metal particle having an oxygen reduction activity, an additive having a basic functional group, and a binder having an acidic functional group, wherein the additive is at least one organic nitrogen compound. JP 2024-11754 A discloses that a melamine compound or a polymer thereof can be used as the additive.

WO 2019/221156 discloses an electrochemical oxygen reduction catalyst comprising platinum-containing nanoparticles and at least one member selected from the group consisting of a melamine compound, a thiocyanuric acid compound, and a polymer containing the melamine compound or the thiocyanuric acid compound as a monomer.

WO 2021/090746 discloses an electrochemical oxygen reduction catalyst comprising platinum-containing nanoparticles and at least one member selected from the group consisting of a polymer containing a melamine compound as a monomer and a thiol melamine compound, wherein the polymer containing the melamine compound as a monomer is a polymer having a repeating unit represented by formula (1), and the thiol melamine compound is a thiol melamine compound represented by formula (2).

### SUMMARY

As described above, there has been known the electrochemical oxygen reduction catalysts using the nitrogen-containing organic compound, such as a melamine compound, as the additive that modifies the catalyst metal. However, it has been found that, in such conventional catalysts, the degree of substitution by the functional group in the nitrogen-containing organic compound affects the catalytic activity, and when the degree of substitution by the functional group is not within an appropriate range, the catalytic activity decreases.

Therefore, the present disclosure provides an electrochemical oxygen reduction catalyst in which a decrease in catalytic activity is suppressed.

The present inventor found that, in an electrochemical oxygen reduction catalyst, the decrease in catalytic activity is suppressed by controlling a degree of substitution by functional groups in a nitrogen-containing cyclic organic compound to a specific range, thus completing the present disclosure.

That is, the present disclosure includes the following aspects and embodiments.

### (Embodiment 1)

An electrochemical oxygen reduction catalyst comprising: a catalyst metal having an oxygen reduction activity; and an additive that modifies the catalyst metal, wherein the additive contains a nitrogen-containing cyclic organic compound having a triazine skeleton, a polymer thereof, or a cation thereof, and wherein in the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound.

### (Embodiment 2)

The electrochemical oxygen reduction catalyst according to Embodiment 1, wherein in the nitrogen-containing cyclic organic compound, the polymer thereof, or the cation thereof, the total number of functional groups that substitute hydrogen atoms of melamine and functional groups that substitute amino groups of melamine is 3.82 or more and 5.41 or less per molecule of the nitrogen-containing cyclic organic compound.

### (Embodiment 3)

The electrochemical oxygen reduction catalyst according to Embodiment 1 or 2, wherein the additive contains a melamine-formaldehyde polymer.

### (Embodiment 4)

The electrochemical oxygen reduction catalyst according to any of Embodiments 1 to 3, wherein the catalyst metal is platinum, a platinum alloy, or a platinum-containing composite.

### (Embodiment 5)

A fuel cell comprising at least a cathode electrode catalyst layer containing the electrochemical oxygen reduction catalyst according to any of Embodiments 1 to 4, an anode electrode catalyst layer, and an electrolyte membrane provided between the cathode electrode catalyst layer and the anode electrode catalyst layer.

### (Embodiment 6)

A water electrolysis system comprising at least an anode electrode catalyst layer containing the electrochemical oxygen reduction catalyst according to any of Embodiments 1 to 4 (specifically, an electrochemical oxygen reduction and oxygen evolution catalyst described in the specification), a cathode electrode catalyst layer, an electrolyte membrane provided between the cathode electrode catalyst layer and the anode electrode catalyst layer, and a water supply unit.

### (Embodiment 7)

A method for manufacturing the electrochemical oxygen reduction catalyst according to any of Embodiments 1 to 4 comprising a modification step of mixing the catalyst metal and the additive to modify the catalyst metal with the additive.

The present disclosure can provide the electrochemical oxygen reduction catalyst in which the decrease in catalytic activity is suppressed.

### BRIEF DESCRIPTION OF THE DRAWINGS

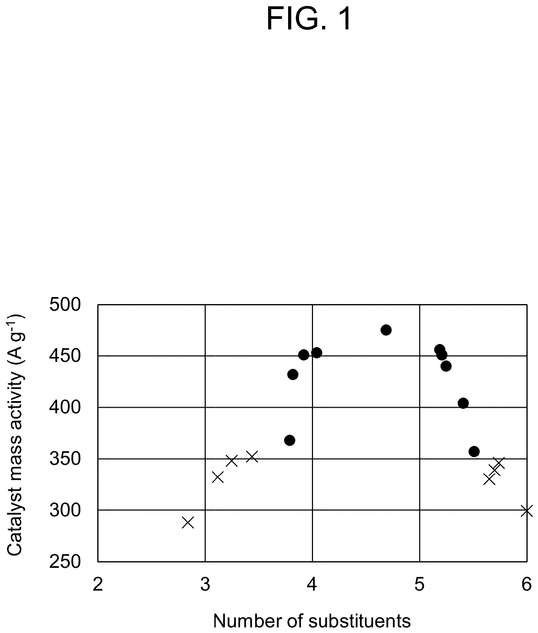

FIG. 1 is a graph illustrating a relation between the number of substituents in a melamine-formaldehyde polymer and a catalyst mass activity.

### DETAILED DESCRIPTION

The following describes embodiments of the present disclosure in detail.

### <Electrochemical Oxygen Reduction Catalyst>

One aspect of the present disclosure relates to an electrochemical oxygen reduction catalyst. The electrochemical oxygen reduction catalyst of the aspect (hereinafter also referred to as the catalyst of the aspect) contains a catalyst metal having an oxygen reduction activity and an additive that modifies the catalyst metal.

In the catalyst of the aspect, the catalyst metal may be any metal having an oxygen reduction activity (oxygen reduction catalytic capability). Examples of the catalyst metal may include metals, such as platinum, ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium. The catalyst metal may contain any of the metals exemplified above alone or may contain an alloy of two or more metals among the metals exemplified above. The catalyst metal may be an oxide, nitride, sulfide, or phosphide of the metals exemplified above. The catalyst metal is platinum, a platinum alloy, or a platinum-containing composite in some embodiments. In the case of the platinum alloy or the platinum-containing composite, examples of the metals other than platinum may include metals, such as ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium. The platinum alloy or the platinum-containing composite may contain two or more metals among the metals exemplified above. Since the catalyst metals exemplified above are contained, the catalyst of the aspect can provide the high catalytic activity.

In the catalyst of the aspect, the catalyst metal may be a metal having both an oxygen reduction activity and an oxygen evolution activity (oxygen evolution catalytic capability). Examples of the catalyst metal having the oxygen reduction activity and the oxygen evolution activity may include metals, such as platinum, ruthenium, iridium, palladium, iron, cobalt, nickel, and manganese. The catalyst metal having the oxygen reduction activity and the oxygen evolution activity is platinum, a platinum alloy, or a platinum-containing composite in some embodiments. When the catalyst metal has both the oxygen reduction activity and the oxygen evolution activity, the catalyst of the aspect is an electrochemical oxygen reduction and oxygen evolution catalyst having both an electrochemical oxygen reduction capability and an electrochemical oxygen evolution capability.

The content of the catalyst metal is typically in a range of 1% by weight to 70% by weight, and for example, in a range of 18% by weight to 50% by weight relative to the total weight of the catalyst of the aspect. When the catalyst metal is a platinum alloy or a platinum-containing composite, the content of the metal other than platinum is typically in a range of 0.11 atomic percent to 60 atomic percent relative to the total mass of the catalyst metal. Since the catalyst metal is contained in the above-described content range, the catalyst of the aspect can provide the high catalytic activity.

The particle diameter (particle size) of the catalyst metal is typically in a range of 1 nm to 100 nm.

In the catalyst of the aspect, the composition and the content of the catalyst metal can be determined, for example, by dissolving and extracting the catalyst metal contained in the catalyst of the aspect and analyzing the metallic elements in the extract by a thermogravimetric analysis (TG) or a high-frequency inductively coupled plasma emission spectroscopy (ICP).

In the catalyst of the aspect, the particle diameter of the catalyst metal can be determined, for example, by measuring the crystallite diameter using an X-ray diffraction method and calculating the average crystallite diameter. Alternatively, the particle diameter of the catalyst metal may be determined by measuring the particle size of 100 to 1000 catalyst metal particles using an electron microscope and calculating the average of these measurements (average particle size).

In the catalyst of the aspect, the additive modifies the catalyst metal. In the electrochemical oxygen reduction catalyst of the aspect, by modifying the catalyst metal with the additive, the electrochemical oxygen reduction reaction is promoted. In the electrochemical oxygen reduction and oxygen evolution catalyst according to one embodiment of the catalyst of the aspect, by modifying the catalyst metal with the additive, the electrochemical oxygen reduction reaction and the electrochemical oxygen evolution reaction are promoted. In the catalyst of the aspect, the additive may be also referred to as a modifier.

In the catalyst of the aspect, the additive contains a nitrogen-containing cyclic organic compound having a triazine skeleton, a polymer thereof, or a cation thereof, and the additive is a nitrogen-containing cyclic organic compound having a triazine skeleton, a polymer thereof, or a cation thereof in some embodiments.

In the catalyst of the aspect, in a nitrogen-containing cyclic organic compound having a triazine skeleton, a polymer thereof, or a cation thereof (hereinafter also referred to as the nitrogen-containing cyclic organic compound or the like), the total number (hereinafter also referred to as the number of substituents) of functional groups (substituents) that substitute hydrogen atoms of melamine and functional groups (substituents) that substitute amino groups of melamine is 3.79 or more and 5.51 or less per molecule of the nitrogen-containing cyclic organic compound. Melamine (1,3,5-triazine-2,4,6-triamine) is a compound having three unsubstituted amino groups (-NH₂) on the triazine ring. It was found that while the unsubstituted amino groups contribute to the adsorption of the additive onto the catalyst metal, an excess of the unsubstituted amino groups attracts polymer electrolytes (hereinafter also referred to as ionomers) having ion exchange groups, such as acidic sulfonic acid polymers, which are typically contained in the catalyst layer, thereby promoting adsorption of the ionomer onto the surface of the catalyst metal and causing catalyst poisoning. When the number of substituents of the nitrogen-containing cyclic organic compound or the like is 3.79 or more, the catalyst poisoning by the ionomer can be suppressed while the sufficient adsorption of the nitrogen-containing cyclic organic compound or the like onto the catalyst metal is ensured, thus suppressing the decrease in catalytic activity. When the number of substituents of the nitrogen-containing cyclic organic compound or the like is 5.51 or less, the molecular bonding force is within an appropriate range, and the adsorption of the nitrogen-containing cyclic organic compound or the like onto the ionomer can be suppressed, thus suppressing the decrease in catalytic activity. In the nitrogen-containing cyclic organic compound or the like, the number of substituents is 3.82 or more and 5.41 or less in some embodiments, 3.92 or more and 5.21 or less in some embodiments, and 4.65 or more and 4.75 or less in some embodiments, per molecule of the nitrogen-containing cyclic organic compound. With the number of substituents of the nitrogen-containing cyclic organic compound or the like within this range, the decrease in catalytic activity is more suppressed, and the catalyst of the aspect can provide the high catalytic activity.

In the catalyst of the aspect, the nitrogen-containing cyclic organic compound, a polymer thereof, or a cation thereof is a compound in which hydrogen atoms and/or amino groups of melamine are substituted, and is a compound in which hydrogen atoms of melamine are substituted or hydrogen atoms and amino groups of melamine are substituted in some embodiments. The "total number of functional groups that substitute hydrogen atoms of melamine and functional groups that substitute amino groups of melamine" of the nitrogen-containing cyclic organic compound, a polymer thereof, or a cation thereof is an index indicating the degree of substitution of melamine in the nitrogen-containing cyclic organic compound or the like. Specifically, the "total number of functional groups that substitute hydrogen atoms of melamine and functional groups that substitute amino groups of melamine" is a sum of the number of hydrogen atoms (-H) of melamine that are substituted by other functional groups and the number of amino groups (-NH₂) of melamine that are substituted by other functional groups per molecule of the nitrogen-containing cyclic organic compound (monomer of the nitrogen-containing cyclic organic compound). The "total number of functional groups that substitute hydrogen atoms of melamine and functional groups that substitute amino groups of melamine" may be referred to as the total number of functional groups, the number of substituents of melamine or simply the number of substituents, or the degree of substitution by functional groups.

The total number of functional groups that substitute hydrogen atoms of melamine and functional groups that substitute amino groups of melamine in the nitrogen-containing cyclic organic compound can be determined by field desorption mass spectrometry (FD-MS) and nuclear magnetic resonance (NMR) measurement. Specifically, the total number of functional groups can be determined by identifying the structural formula of the nitrogen-containing cyclic organic compound using FD-MS and NMR measurement, obtaining each of the number of hydrogen atoms of melamine that are substituted by other functional groups and the number of amino groups of melamine that are substituted by other functional groups for the identified structural formula, and calculating the sum of these values.

The nitrogen-containing cyclic organic compound may be a mixture of a plurality of nitrogen-containing cyclic organic compounds having a triazine skeleton that are mutually different in the structural formula. In this case, the number of substituents is an average value of the number of substituents of the plurality of compounds. Therefore, insofar as the average value of the number of substituents is within the above-described range, a compound with the number of substituents outside the above-described range may be contained in the mixture. The number of substituents of the mixture of the plurality of compounds can be determined by measuring structural formulas and respective relative proportions in the mixture, obtaining the number of substituents of each structural formula in the manner described above, and calculating an average value of the number of substituents using the values of the relative proportions of the structural formulas. In this case, the number of substituents may be a value including a decimal point.

In the case of the polymer of the nitrogen-containing cyclic organic compound, the number of substituents of the polymer is defined as the number of substituents per smallest unit (monomer, that is, single molecule of the nitrogen-containing cyclic organic compound) constituting the polymer. The monomer means the smallest unit constituting the polymer, which does not contain two or more triazine skeletons. When the polymer of the nitrogen-containing cyclic organic compound contains a plurality of compounds or polymers mutually different in the structural formula, as described above, the number of substituents can be determined by calculating the average value of the number of substituents using the values of the relative proportions of the structural formulas.

In the catalyst of the aspect, the nitrogen-containing cyclic organic compound or the like has a triazine skeleton. With the additive containing the nitrogen-containing cyclic organic compound or the like having a triazine skeleton, the catalyst of the aspect can provide the high durability. While the triazine skeleton may be, for example, 1,2,3-triazine, 1,2,4-triazine, or 1,3,5-triazine, the triazine skeleton is 1,3,5-triazine in some embodiments. The number of substituents of the compound when the triazine skeleton is 1,2,3-triazine or 1,2,4-triazine is defined as the number of substituents when they are converted into 1,3,5-triazine.

In one embodiment, the nitrogen-containing cyclic organic compound having a triazine skeleton, a polymer thereof, or a cation thereof is a compound represented by general formula (1) below, a polymer thereof, or a cation thereof. Melamine corresponds to a compound of the formula (1) in which R₁ to R₆ are each a hydrogen atom. 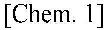 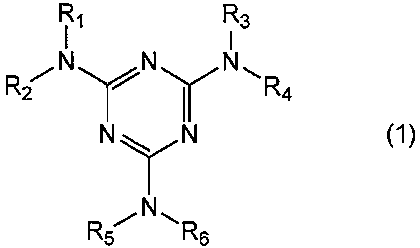 wherein, R₁ to R₆ each independently represent one functional group selected from the group consisting of a hydrogen atom, a halogen atom, a nitrile group, an amide group, an imine group, a thiol group, a hydroxyl group, a sulfo group, a carboxylic acid group, a phosphate group, a ketone group, an aldehyde group, an ester group, an alkoxy group, a phenol group, a cyclopentyl group, a cyclohexyl group, an alkylthiol group having 1 to 10 carbon atoms, an alkylhydroxyl group having 1 to 10 carbon atoms, an alkylsulfonic acid group having 1 to 10 carbon atoms, a perfluoroalkyl group having 1 to 10 carbon atoms, an alkyl group having 1 to 10 carbon atoms, an alkenylthiol group having 2 to 10 carbon atoms, an alkenylhydroxyl group having 2 to 10 carbon atoms, an alkenylsulfonic acid group having 2 to 10 carbon atoms, a perfluoroalkenyl group having 2 to 10 carbon atoms, and an alkenyl group having 2 to 10 carbon atoms; each of these functional groups may have, in its molecular chain, at least one selected from the group consisting of at least one functional group selected from the above-described functional groups, an aromatic ring, a hetero ring, an oxygen atom, a sulfur atom, a nitrogen atom, a fluorine atom, a chlorine atom, a bromine atom, an iodine atom, and a hydrogen atom; provided that R₁ to R₆ are selected to satisfy the above-described number of substituents of melamine.

In another one embodiment, the nitrogen-containing cyclic organic compound having a triazine skeleton, a polymer thereof, or a cation thereof is a compound represented by general formula (2) below, a polymer thereof, or a cation thereof, 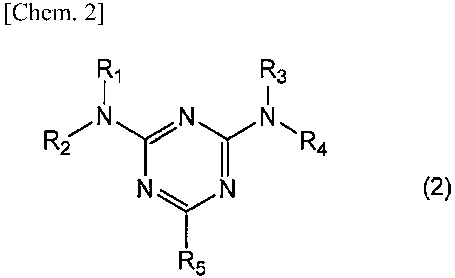 wherein, R₁ to R₅ each independently represent one functional group selected from the group consisting of a hydrogen atom, a halogen atom, a nitrile group, an amide group, an imine group, a thiol group, a hydroxyl group, a sulfo group, a carboxylic acid group, a phosphate group, a ketone group, an aldehyde group, an ester group, an alkoxy group, a phenol group, a cyclopentyl group, a cyclohexyl group, an alkylthiol group having 1 to 10 carbon atoms, an alkylhydroxyl group having 1 to 10 carbon atoms, an alkylsulfonic acid group having 1 to 10 carbon atoms, a perfluoroalkyl group having 1 to 10 carbon atoms, an alkyl group having 1 to 10 carbon atoms, an alkenylthiol group having 2 to 10 carbon atoms, an alkenylhydroxyl group having 2 to 10 carbon atoms, an alkenylsulfonic acid group having 2 to 10 carbon atoms, a perfluoroalkenyl group having 2 to 10 carbon atoms, and an alkenyl group having 2 to 10 carbon atoms; each of these functional groups may have, in its molecular chain, at least one selected from the group consisting of at least one functional group selected from the above-described functional groups, an aromatic ring, a hetero ring, an oxygen atom, a sulfur atom, a nitrogen atom, a fluorine atom, a chlorine atom, a bromine atom, an iodine atom, and a hydrogen atom; provided that R₁ to R₅ are selected to satisfy the above-described number of substituents of melamine.

In still another one embodiment, the nitrogen-containing cyclic organic compound having a triazine skeleton, a polymer thereof, or a cation thereof is a compound represented by general formula (3) below, a polymer thereof, or a cation thereof, 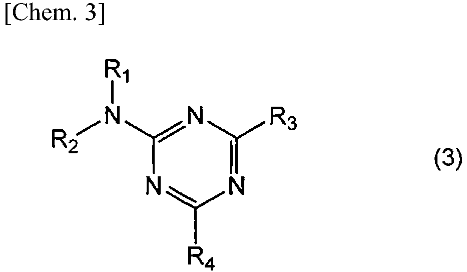 wherein, R₁ to R₄ each independently represent one functional group selected from the group consisting of a hydrogen atom, a halogen atom, a nitrile group, an amide group, an imine group, a thiol group, a hydroxyl group, a sulfo group, a carboxylic acid group, a phosphate group, a ketone group, an aldehyde group, an ester group, an alkoxy group, a phenol group, a cyclopentyl group, a cyclohexyl group, an alkylthiol group having 1 to 10 carbon atoms, an alkylhydroxyl group having 1 to 10 carbon atoms, an alkylsulfonic acid group having 1 to 10 carbon atoms, a perfluoroalkyl group having 1 to 10 carbon atoms, an alkyl group having 1 to 10 carbon atoms, an alkenylthiol group having 2 to 10 carbon atoms, an alkenylhydroxyl group having 2 to 10 carbon atoms, an alkenylsulfonic acid group having 2 to 10 carbon atoms, a perfluoroalkenyl group having 2 to 10 carbon atoms, and an alkenyl group having 2 to 10 carbon atoms; each of these functional groups may have, in its molecular chain, at least one selected from the group consisting of at least one functional group selected from the above-described functional groups, an aromatic ring, a hetero ring, an oxygen atom, a sulfur atom, a nitrogen atom, a fluorine atom, a chlorine atom, a bromine atom, an iodine atom, and a hydrogen atom; provided that R₁ to R₄ are selected to satisfy the above-described number of substituents of melamine.

The "total number of functional groups that substitute hydrogen atoms of melamine and functional groups that substitute amino groups of melamine" is described for the compounds of the formula (1), the formula (2), and the formula (3). In the compound of the formula (1), the number of R₁ to R₆ that are not hydrogen atoms corresponds to the total number of functional groups. In the compound of the formula (2), since R₅ is not an amino group, the number of functional groups that substitute amino groups of melamine is 1, and the sum of 1 and the number of R₁ to R₄ that are not hydrogen atoms corresponds to the total number of functional groups. In the compound of the formula (3), since R₃ and R₄ are not amino groups, the number of functional groups that substitute amino groups of melamine is 2, and the sum of 2 and the number of R₁ and R₂ that are not hydrogen atoms corresponds to the total number of functional groups.

In the formula (1), the formula (2), and the formula (3), R₁ to R₆ are not an amino group or a group containing an amino group.

In one embodiment, in the formula (1), the formula (2), and the formula (3), R₁ to R₆ are each a hydrogen atom or an alkyl group having 1 to 10 carbon atoms, and the alkyl group may have 1 to 6 (1 to 3, in some embodiments) substituents, such as a hydroxyl group and a halogen atom.

In the formula (1), the formula (2), and the formula (3), the alkyl group is a lower alkyl group in some embodiments. Examples of the lower alkyl groups may include alkyl groups having 1 to 6 carbon atoms, and not particularly limited, for example, methyl, ethyl, n-propyl, isopropyl, n-butyl, isobutyl, sec-butyl, tert-butyl, n-pentyl, and n-hexyl groups may be included.

In one embodiment, in the formula (1), the formula (2), and the formula (3), R₁ to R₆ are each a hydrogen atom or a lower alkyl group, and the lower alkyl group may have a hydroxyl group. In some embodiments, R₁ to R₆ are each a hydrogen atom, a methylol group (-CH₂OH), or an alkylated methylol group. The alkyl group of the alkylated methylol group is, for example, a lower alkyl group.

In one embodiment, the compound of the formula (2) is a compound in which R₅ is a thiol group or a hydroxyl group, and R₁ to R₄ are a hydrogen atom or an alkyl group having 1 to 10 carbon atoms (in some embodiments, an alkyl group having 1 to 6 carbon atoms, for example, a butyl group). In this embodiment, the alkyl group may have a substituent, such as a hydroxyl group and a halogen atom.

In one embodiment, the compound of the formula (3) is a compound in which R₃ and R₄ are a thiol group or a hydroxyl group, and R₁ and R₂ are a hydrogen atom or an alkyl group having 1 to 10 carbon atoms (in some embodiments, an alkyl group having 1 to 6 carbon atoms, for example, a butyl group). In this embodiment, the alkyl group may have a substituent, such as a hydroxyl group and a halogen atom.

The compound of the formula (2) in which R₅ is a thiol group or a hydroxyl group and the compound of the formula (3) in which R₃ and/or R₄ is a thiol group or a hydroxyl group may be an isomer thereof. For example, in the compound of the formula (2) in which R₅ is a hydroxyl group, there exist an isomer having a structural formula represented by formula (2-1) below. In the compound of the formula (3) in which R₃ and R₄ are hydroxyl groups, there exist an isomer having a structural formula represented by formula (3-1) below. The definitions of R₁ to R₄ in the formula (2-1) and the definitions of R₁ and R₂ in the formula (3-1) are as described for the formula (2) and the formula (3), respectively. The numbers of substituents in such isomers are defined as the number of substituents in the compound having a triazine skeleton.

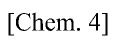

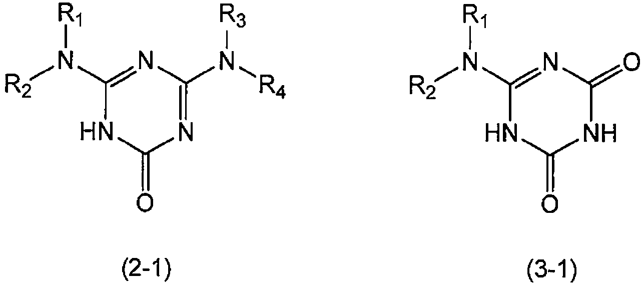

The polymer of the nitrogen-containing cyclic organic compound is, for example, a homopolymer or copolymer containing the compound of the formula (1), the formula (2), or the formula (3) as a monomer. The polymer may be cations thereof.

In one embodiment, the nitrogen-containing cyclic organic compound is a melamine-formaldehyde compound that is a reaction product of melamine and formaldehyde. In the melamine-formaldehyde compound, melamine is substituted by a group derived from formaldehyde (for example, a methylol group or an alkylated methylol group).

In one embodiment, the polymer of the nitrogen-containing cyclic organic compound is a polymer of the melamine-formaldehyde compound. The polymer of the melamine-formaldehyde compound is a copolymer of melamine and formaldehyde (also referred to as a melamine-formaldehyde polymer). In the catalyst of the aspect, the additive contains the melamine-formaldehyde polymer in some embodiments. The additive containing the melamine-formaldehyde polymer can reduce the cost of the catalyst of the aspect. As described above, in the melamine-formaldehyde polymer, the number of substituents of the polymer is defined as the number of substituents of the smallest unit (monomer, that is, the melamine-formaldehyde compound) constituting the polymer. The melamine-formaldehyde polymer may be a derivative thereof. Examples of the derivative of the melamine-formaldehyde polymer may include methylated poly (melamine-co-formaldehyde) and isobutylated poly (melamine-co-formaldehyde). These polymers may be a cation thereof. In these polymers, the polymerization degree is typically in a range of 1 to 10000, and in a range of 10 to 10000 in some embodiments.

The catalyst of the aspect typically includes a carrier that supports the catalyst metal. Examples of the carrier may include carbons, oxides, and the like having electrical conductivity and mixtures of one or more thereof. The carbon is carbon black (acetylene black, ketjen black, furnace black, and the like), activated carbon, black lead, glassy carbon, graphite, graphene, carbon fiber, carbon nanotube, carbon nitride, sulfur-doped carbon, phosphorus-doped carbon, channel black, roller black, disk black, oil furnace black, gas furnace black, lamp black, thermal black, or Vulcan carbon, or a mixture of one or more thereof in some embodiments. The oxide is a titanium oxide, a niobium oxide, a tin oxide, a tungsten oxide, or a molybdenum oxide, or a mixture of one or more thereof in some embodiments. The carrier is a carbon in some embodiments, and is carbon black in some embodiments.

The carrier may be any of a primary particle or a secondary particle. The particle diameter of the primary particle of the carrier is typically in a range of 5 nm to 5000 nm.

In the catalyst of the aspect, the weight ratio of the additive to the carrier is typically in a range of 0.001 to 10, and for example, in a range of 0.01 to 1.

In the catalyst of the aspect, the composition, the content, and the particle diameter of the carrier can be determined by the means similar to that used in the determination of the composition, the content, and the particle diameter of the catalyst metal described above.

The catalyst of the aspect may contain a binder. The binder is typically a polyelectrolyte (ionomer) having ion exchange groups. Examples of the ion exchange groups in the polyelectrolytes include sulfonic acid groups and phosphoric acid groups. Examples of polymers constituting the polyelectrolyte include polymers mainly containing perfluorocarbon, polyether ether ketone, polybenzimidazole, and the like. The binder is a perfluorocarbon sulfonic acid polymer in some embodiments.

### <Applications of Electrochemical Oxygen Reduction Catalyst>

Another one aspect of the disclosure relates to fuel cells. A fuel cell of this aspect comprises at least a cathode electrode catalyst layer, an anode electrode catalyst layer, and an electrolyte membrane provided between the cathode electrode catalyst layer and the anode electrode catalyst layer, in which the cathode electrode catalyst layer contains an electrochemical oxygen reduction catalyst of one aspect of the disclosure. When the fuel cell of this aspect is operated, a fuel gas containing hydrogen is supplied to the electrode catalyst layer on the anode (fuel electrode) side, and an oxidizing gas containing oxygen is supplied to the electrode catalyst layer on the cathode (air electrode) side, thereby allowing an electromotive force to be obtained. In the fuel cell of this aspect, the oxidation reaction of hydrogen progresses on the anode, and the reduction reaction of oxygen progresses on the cathode. In the electrochemical oxygen reduction catalyst of the aspect, since the decrease in catalytic activity is suppressed and the high catalytic activity is provided, the electrochemical oxygen reduction catalyst of the aspect can be appropriately used for the cathode electrode catalyst layer in the fuel cell.

Specifically, the fuel cell of the aspect comprises at least a cathode electrode catalyst layer containing the electrochemical oxygen reduction catalyst comprising the catalyst metal having the oxygen reduction activity and the additive that modifies the catalyst metal, an anode electrode catalyst layer, and an electrolyte membrane provided between the cathode electrode catalyst layer and the anode electrode catalyst layer. The additive contains the nitrogen-containing cyclic organic compound having a triazine skeleton, a polymer thereof, or a cation thereof. In the nitrogen-containing cyclic organic compound, a polymer thereof, or a cation thereof, the total number of functional groups that substitute hydrogen atoms of melamine and functional groups that substitute amino groups of melamine is 3.79 or more and 5.51 or less per molecule of the nitrogen-containing cyclic organic compound.

Still another one aspect of the present disclosure relates to a water electrolysis system. The water electrolysis system of this aspect comprises at least a cathode electrode catalyst layer, an anode electrode catalyst layer, an electrolyte membrane provided between the cathode electrode catalyst layer and the anode electrode catalyst layer, and a water supply unit, in which the anode electrode catalyst layer contains the electrochemical oxygen reduction catalyst of one aspect of the disclosure. In the water electrolysis system of the aspect, oxygen and hydrogen can be obtained through electrolyzation of water. In the water electrolysis system of the aspect, the reaction of generating hydrogen progresses on the cathode, and the reaction of generating oxygen progresses on the anode. As described above, in one embodiment, when the catalyst metal having both the oxygen reduction activity and the oxygen evolution activity is used, the electrochemical oxygen reduction catalyst of the aspect is an electrochemical oxygen reduction and oxygen evolution catalyst having both the electrochemical oxygen reduction capability and the electrochemical oxygen evolution capability. In the electrochemical oxygen reduction and oxygen evolution catalyst of the embodiment, since the decrease in catalytic activity is suppressed and the high catalytic activity is provided, the electrochemical oxygen reduction and oxygen evolution catalyst of the embodiment can be appropriately used for the anode electrode catalyst layer in the water electrolysis system.

Specifically, the water electrolysis system of the aspect comprises at least an anode electrode catalyst layer containing the electrochemical oxygen reduction and oxygen evolution catalyst comprising the catalyst metal having the oxygen reduction activity and the oxygen evolution activity and the additive that modifies the catalyst metal, a cathode electrode catalyst layer, an electrolyte membrane provided between the cathode electrode catalyst layer and the anode electrode catalyst layer, and a water supply unit. The additive contains the nitrogen-containing cyclic organic compound having a triazine skeleton, a polymer thereof, or a cation thereof. In the nitrogen-containing cyclic organic compound, a polymer thereof, or a cation thereof, the total number of functional groups that substitute hydrogen atoms of melamine and functional groups that substitute amino groups of melamine is 3.79 or more and 5.51 or less per molecule of the nitrogen-containing cyclic organic compound.

Still another one aspect of the present disclosure relates to a metal-air battery. The metal-air battery of the aspect comprises at least a cathode electrode catalyst layer, an anode metal layer, and an electrolyte membrane provided between the cathode electrode catalyst layer and the anode metal layer, in which the cathode electrode catalyst layer contains the electrochemical oxygen reduction catalyst of one aspect of the disclosure.

Since the fuel cell and the metal-air battery of the aspects comprise the electrochemical oxygen reduction catalyst of one aspect of the present disclosure in the cathode electrode catalyst layer, the decrease in catalytic activity is suppressed. Additionally, since the water electrolysis system of the aspect comprises the electrochemical oxygen reduction catalyst of one aspect of the present disclosure (specifically, the electrochemical oxygen reduction and oxygen evolution catalyst according to one embodiment of the present disclosure) in the anode electrode catalyst layer, the decrease in catalytic activity is suppressed.

In the fuel cell, the water electrolysis system, and the metal-air battery of the aspects, the cathode or anode electrode catalyst layer typically contains an ionomer (for example, sulfonic acid polymer, specifically, perfluorocarbon sulfonic acid polymer or the like) in addition to the electrochemical oxygen reduction catalyst or the electrochemical oxygen reduction and oxygen evolution catalyst of one aspect of the present disclosure. In the fuel cell, the water electrolysis system, and the metal-air battery of the aspects, by using the electrochemical oxygen reduction catalyst or the electrochemical oxygen reduction and oxygen evolution catalyst containing the nitrogen-containing cyclic organic compound or the like in which the number of substituents is controlled within the predetermined range, the catalyst poisoning by the ionomer is suppressed, and the decrease in catalytic activity is suppressed.

### <Manufacturing Method for Electrochemical Oxygen Reduction Catalyst>

Another one aspect of the disclosure relates to a manufacturing method for the electrochemical oxygen reduction catalyst of one aspect of the disclosure. The method of this aspect comprises a modification step. The method of this aspect may optionally comprise a preparation step and an electrode catalyst layer preparation step.

Specifically, the method of the aspect is a method for manufacturing the electrochemical oxygen reduction catalyst comprising the catalyst metal having the oxygen reduction activity and the additive that modifies the catalyst metal. The additive contains the nitrogen-containing cyclic organic compound having a triazine skeleton, a polymer thereof, or a cation thereof. In the nitrogen-containing cyclic organic compound, a polymer thereof, or a cation thereof, the total number of functional groups that substitute hydrogen atoms of melamine and functional groups that substitute amino groups of melamine is 3.79 or more and 5.51 or less per molecule of the nitrogen-containing cyclic organic compound. The method comprises a modification step of mixing the catalyst metal and the additive to modify the catalyst metal with the additive.

### [Preparation Step]

This step comprises preparing the catalyst metal and the additive. This step typically comprises also preparing the carrier and the binder. Further, this step may optionally comprise further preparing materials, such as a solvent and a substrate.

The catalyst metal, the carrier, and the binder prepared in this step may be materials having the above-described characteristics. For example, the catalyst metal prepared in this step may be supported on the above-described carrier. In this step, each material may be prepared in-house so as to have predetermined characteristics, or may be prepared by purchasing or otherwise obtaining commercially available products.

The additive prepared in this step contains the nitrogen-containing cyclic organic compound having a triazine skeleton, a polymer thereof, or a cation thereof. In this step, the additive may be prepared by oneself or may be prepared by purchasing or otherwise obtaining commercially available products. In the preparation of the additive, it is sufficient to measure the number of substituents of the nitrogen-containing cyclic organic compound having a triazine skeleton, a polymer thereof, or a cation thereof as described above and select one in which the number of substituents is within a predetermined range. When the additive contains a polymer of the nitrogen-containing cyclic organic compound, for example, by adjusting reaction conditions (reaction temperature and the like) during the polymerization, the number of substituents can fall within the predetermined range.

### [Modification Step]

This step comprises mixing the catalyst metal and the additive to modify the catalyst metal with the additive. In this step, the binder may be optionally mixed together in addition to the catalyst metal and the additive.

In this step, typically, the catalyst metal, the additive, and optionally the binder are mixed with the solvent. The solvent is not particularly limited, and any liquid may be used for the solvent. Examples of the solvent may include water, alcohols, and mixtures of one or more thereof. Examples of alcohols may include methanol, ethanol, 1-propanol, 2-propanol, 2-methyl-2-propanol (tert-butyl alcohol), diacetone alcohol, ethylene glycol, and propylene glycol.

In this step, the mixing means of the materials is not particularly limited. Examples of the mixing means may include an ultrasonic homogenizer, a jet mill, a bead mill, a ball mill, a high-shear mixer, and a Filmix mixer. Specific conditions (for example, stirring speed, stirring time, rotation speed, and the like) of the mixing means exemplified above are not particularly limited and may be set to any range as necessary.

This step may optionally comprise a vacuum degassing treatment in which the obtained mixture is degassed under vacuum conditions. In this case, specific conditions (for example, pressure, treatment time, and the like) of the vacuum degassing treatment are not particularly limited and may be set to any range as necessary. The vacuum degassing treatment may be performed multiple times.

In this step, by removing the solvent from the obtained mixture, the electrochemical oxygen reduction catalyst of one aspect of the present disclosure can be obtained. When the catalyst metal has both the oxygen reduction activity and the oxygen evolution activity, the electrochemical oxygen reduction and oxygen evolution catalyst having both the electrochemical oxygen reduction capability and the electrochemical oxygen evolution capability can be obtained. The removal of the solvent is not particularly limited and can be performed by any method, such as drying by heating or filtration.

Alternatively, when the electrode catalyst layer preparation step described below is performed, the mixture obtained in this step can be utilized as a catalyst ink containing the catalyst of one aspect of the disclosure in the electrode catalyst layer preparation step. In this case, the mixture obtained through this step may be used as is or with the addition of further solvents as exemplified above.

### [Electrode Catalyst Layer Preparation Step]

This step comprises coating a surface of a substrate with the catalyst ink containing the catalyst of one aspect of the present disclosure obtained through the modification step.

The substrate used in this step is not particularly limited and may include materials, such as polytetrafluoroethylene (PTFE), electrolyte membranes having ion exchange groups, carbon fiber, and metal fiber.

In this step, the coating means of the catalyst ink is not particularly limited. Examples of the coating means may include a die coating method, a spin coating method, a screen printing method, a doctor blade method, a squeegee method, a spray coating method, and an applicator method. Specific conditions of the coating means exemplified above are not particularly limited and can be set to any range as necessary.

In this step, typically, the solvent is removed from the catalyst ink after it has been applied. The removal of the solvent is not particularly limited and can be performed by any method, such as drying by heating. Specific conditions (for example, temperature, pressure, treatment time, and the like) of the removal of the solvent are not particularly limited and can be set to any range as necessary.

By performing this step, the catalyst of one aspect of the disclosure can be obtained in a form provided on the surface of the substrate (electrode catalyst layer). In this case, the thickness of the electrode catalyst layer is typically in the range of 5 µm to 30 µm. The content of the catalyst metal in the electrode catalyst layer is typically in the range of 0.1 mg/cm² to 0.6 mg/cm², based on the weight to the total area of the electrode catalyst layer.

As described above, by performing the method of the aspect, the catalyst of one aspect of the present disclosure can be manufactured.

As described in detail in this description, in the catalyst of one aspect of the present disclosure, the decrease in catalytic activity is suppressed. The manufacturing method of one aspect of the present disclosure can efficiently provide the catalyst of one aspect of the present disclosure in which the decrease in catalytic activity is suppressed. Therefore, the catalyst of one aspect of the present disclosure can be appropriately used for the fuel cell or the water electrolysis system.

### Examples

The following further specifically describes the present disclosure using examples. However, the technical scope of the present disclosure is not limited to these examples.

### <Production of Electrochemical Oxygen Reduction Catalyst>

### [Examples 1 to 10 and Comparative Examples 2 to 10]

Samples of the melamine-formaldehyde polymer different in the total number of functional groups that substitute hydrogen atoms of melamine and functional groups that substitute amino groups of melamine (the number of substituents) were prepared. The samples were purchased from Tokyo Chemical Industry, Sigma-Aldrich, and FUJIFILM Wako Pure Chemical. The number of substituents was measured as described above. Specifically, the structural formulas and its relative proportions in the samples were measured by FD-MS and NMR measurement to obtain the number of substituents for each structural formula, and the average value of the number of substituents was calculated using the values of the relative proportions of the structural formulas.

A catalyst metal particle-supported carrier (primary particle diameter: 10 nm to 100 nm) in which platinum particles (particle diameter: 3 nm to 4 nm) are supported on a carbon carrier (acetylene black) was prepared.

A predetermined amount of the catalyst metal particle-supported carrier, each of the melamine-formaldehyde polymers (additive), a perfluorocarbon sulfonic acid polymer (based on Nafion (manufactured by Chemours), EW:1100), and a mixed solvent of 2-propanol and ultrapure water were charged into a container. These materials were mixed and stirred using stirrers (homogenizer and Filmix mixer) to prepare catalyst inks containing the electrochemical oxygen reduction catalysts (modification step). The ratio of the weight of the additive to the weight of the carbon carrier was set to 0.1.

### [Comparative Example 1]

A catalyst ink containing an electrochemical oxygen reduction catalyst in which platinum particles (catalyst metal) are not modified with a melamine-formaldehyde polymer (additive) was prepared in the same manner as described above except that the melamine-formaldehyde polymer was not added.

### <Evaluation of Electrochemical Oxygen Reduction Catalysts>

The catalytic performance was evaluated based on the catalyst mass activity (A g⁻¹) measured at a potential of 0.9 V (vs. reversible hydrogen electrode (RHE)). The catalyst mass activity is defined as the current per unit weight of metal particles. A higher value indicates a higher catalytic activity.

The catalyst ink was drop-cast onto a glassy carbon rotating electrode (5 mm in diameter, manufactured by Hokuto Denko Co., Ltd.) such that the loading of the carrier was 20 µg cm⁻², and then dried to form an electrode with a catalyst layer on its surface.

The electrochemical measurements were conducted using a three-electrode system, where the formed electrode served as a working electrode, the reversible hydrogen electrode was used as a reference electrode, and a carbon rod functioned as the counter electrode. The electrochemical measurements were conducted using a rotating disk electrode (RDE) method. A perchloric acid solution adjusted to a concentration of 0.1 M using ultrapure water was employed as the electrolyte. After performing a cyclic voltammetry in an inert gas atmosphere, the gas atmosphere was switched to oxygen, and a linear sweep voltammetry was conducted starting from a low potential side. The rotation speed of the electrode was varied to 400, 900, 1600, 2000, 2500, and 3600 rpm, and the linear sweep voltammetry measurements were conducted repeatedly. From the obtained potential-current characteristics, a Koutecky-Levich plot was created to calculate the catalyst mass activity (A g⁻¹) at 0.9 V (vs. RHE).

Table 1 illustrates the number of substituents in the melamine-formaldehyde polymer and the evaluation result (catalyst mass activity) of Examples 1 to 10 and Comparative Examples 1 to 10. Additionally, FIG. 1 illustrates the relation between the number of substituents in the melamine-formaldehyde polymer and the catalyst mass activity.

**[Table 1]**

| | Number of substituents | Catalyst mass activity (Ag⁻¹) |
|---|---|---|
| Example 1 | 3.79 | 368 |
| Example 2 | 3.82 | 432 |
| Example 3 | 3.92 | 451 |
| Example 4 | 4.04 | 453 |
| Example 5 | 4.69 | 475 |
| Example 6 | 5.19 | 456 |
| Example 7 | 5.21 | 451 |
| Example 8 | 5.25 | 440 |
| Example 9 | 5.41 | 404 |
| Example 10 | 5.51 | 357 |
| Comparative Example 1 | - | 260 |
| Comparative Example 2 | 0.00 | 302 |
| Comparative Example 3 | 2.84 | 288 |
| Comparative Example 4 | 3.12 | 332 |
| Comparative Example 5 | 3.25 | 348 |
| Comparative Example 6 | 3.44 | 352 |
| Comparative Example 7 | 5.65 | 330 |
| Comparative Example 8 | 5.7 | 339 |
| Comparative Example 9 | 5.74 | 346 |
| Comparative Example 10 | 6.00 | 299 |

As illustrated in Table 1 and FIG. 1, when the number of substituents in the melamine-formaldehyde polymer is within the range of 3.79 or more and 5.51 or less, the catalyst mass activity is 355 A g⁻¹ or more, and the catalytic activity was high. When the catalyst mass activity is 355 A g⁻¹ or more, the number of cells in the fuel cell stack and the like can be decreased compared with the conventional product, thus leading to the cost reduction. It is considered that, when the number of substituents in the melamine-formaldehyde polymer (additive) is 3.79 or more, a sufficient amount of unsubstituted amino groups capable of adsorbing onto the catalyst metal is present in the polymer, and adsorption of the perfluorocarbon sulfonic acid polymer (ionomer) onto the catalyst metal surface via the melamine-formaldehyde polymer can be suppressed, thereby suppressing catalyst poisoning by the ionomer and suppressing the decrease in catalytic activity. Additionally, it is considered that, when the number of substituents in the melamine-formaldehyde polymer (additive) is 5.51 or less, the molecular bonding force is within the appropriate range, and the adsorption of the melamine-formaldehyde polymer onto the ionomer can be suppressed, thereby suppressing the decrease in catalytic activity.

The disclosure is not limited to the above-described examples but encompasses various modifications. For example, the above examples are described in detail to illustrate the disclosure in an easily understandable manner, and are not necessarily limited to those having all the described configurations. It is also possible to add, delete, or substitute other configurations for some of the configurations in each embodiment.

## Claims

1. An electrochemical oxygen reduction catalyst comprising:
a catalyst metal having an oxygen reduction activity; and
an additive that modifies the catalyst metal,
wherein the additive contains a nitrogen-containing cyclic organic compound having a triazine skeleton, a polymer thereof, or a cation thereof, and
wherein in the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound.

2. The electrochemical oxygen reduction catalyst according to claim 1,
wherein in the nitrogen-containing cyclic organic compound, the polymer thereof, or the cation thereof, the total number of functional groups that substitute hydrogen atoms of melamine and functional groups that substitute amino groups of melamine is 3.82 or more and 5.41 or less per molecule of the nitrogen-containing cyclic organic compound.

3. The electrochemical oxygen reduction catalyst according to claim 1 or 2,
wherein the additive contains a melamine-formaldehyde polymer.

4. The electrochemical oxygen reduction catalyst according to any one of claims 1 to 3,
wherein the catalyst metal is platinum, a platinum alloy, or a platinum-containing composite.

5. A fuel cell comprising:
at least a cathode electrode catalyst layer containing an electrochemical oxygen reduction catalyst comprising a catalyst metal having an oxygen reduction activity and an additive that modifies the catalyst metal; an anode electrode catalyst layer; and an electrolyte membrane provided between the cathode electrode catalyst layer and the anode electrode catalyst layer,
wherein the additive contains a nitrogen-containing cyclic organic compound having a triazine skeleton, a polymer thereof, or a cation thereof, and
wherein in the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound.

6. A water electrolysis system comprising:
at least an anode electrode catalyst layer containing an electrochemical oxygen reduction and oxygen evolution catalyst comprising a catalyst metal having an oxygen reduction activity and an oxygen evolution activity and an additive that modifies the catalyst metal; a cathode electrode catalyst layer; an electrolyte membrane provided between the cathode electrode catalyst layer and the anode electrode catalyst layer; and a water supply unit,
wherein the additive contains a nitrogen-containing cyclic organic compound having a triazine skeleton, a polymer thereof, or a cation thereof, and
wherein in the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound.

7. A method for manufacturing an electrochemical oxygen reduction catalyst comprising a catalyst metal having an oxygen reduction activity and an additive that modifies the catalyst metal,
wherein the additive contains a nitrogen-containing cyclic organic compound having a triazine skeleton, a polymer thereof, or a cation thereof,
wherein in the nitrogen-containing cyclic organic compound, the polymer thereof, or the cation thereof, a total number of functional groups that substitute hydrogen atoms of melamine and functional groups that substitute amino groups of melamine is 3.79 or more and 5.51 or less per molecule of the nitrogen-containing cyclic organic compound, and
the method comprising a modification step of mixing the catalyst metal and the additive to modify the catalyst metal with the additive.
